# EUROPEAN PATENT APPLICATION

(11) **EP 4 393 783 A1**
(43) Date of publication of application: **03.07.2024**
(21) Application number: 22861044.0
(22) Date of filing: 27.07.2022
(51) Int. Cl.: B60W 30/06

(54) **PARKING ASSISTANCE DEVICE, PROGRAM, AND PARKING ASSISTANCE METHOD**

(30) Priority: 23.08.2021 JP 2021135772
(71) Applicant: AISIN CORPORATION, Kariya-shi, Aichi 448-8650 (JP)
(72) Inventor: INAGAKI, Hiroki, Tokyo 103-0022 (JP); TOMOZAWA, Motokatsu, Tokyo 103-0022 (JP)
(74) Representative: TBK
(86) International application number: PCT/JP2022/028925
(87) International publication number: WO 2023/026753

(57) **Abstract**

A park assist device includes: a route setting unit that sets a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and a guidance control unit that guides the vehicle according to the parking route. The route setting unit sets a distance between the vehicle stopped at the forward travel stop position and an entry-side end of the vehicle into the parking space, and sets the forward travel stop position to a position that allows the vehicle to be guided so as to be parked in the forward travel attitude into the parking space after the guiding the vehicle in reverse by turning the vehicle with a steering angle determined according to the distance.

## Description

### TECHNICAL FIELD

The present invention relates to park assist devices, programs, and park assist methods.

### BACKGROUND ART

Park assist devices that assist in parking a vehicle traveling in a parking lot are conventionally known in the art. Such a park assist device sets a route from near a parking spot to a target parking space, and autonomously drives the vehicle to the target parking space along the route to park the vehicle.

### Related Art Documents

### Patent Documents

Patent Document 1: Japanese Unexamined Patent Application Publication No. 2019-128844 (JP 2019-128844 A)
Patent Document 2: Japanese Unexamined Patent Application Publication No. 2006-044484 (JP 2006-044484 A)

### SUMMARY OF THE INVENTION

### Problem to be Solved by the Invention

According to the conventional park assist devices, however, when parking the vehicle forward into a parking space with another vehicle(s) parked on either side, it may not be possible to accurately park the vehicle in the parking space depending on the situation of the other vehicle(s).

The present invention was made in view of the above circumstances, and provides a park assist device, program, and park assist method that can accurately park a vehicle in a parking space regardless of the situation of other vehicles when parking the vehicle forward into the parking space.

### Means for Solving the Problem

In order to solve the above problem and achieve the above object, for example, a park assist device of the present invention includes: a route setting unit that sets a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and a guidance control unit that guides the vehicle according to the parking route. The route setting unit sets a distance between the vehicle stopped at the forward travel stop position and an entry-side end of the vehicle into the parking space, and sets the forward travel stop position to a position that allows the vehicle to be guided so as to be parked in the forward travel attitude into the parking space after the guiding the vehicle in reverse by turning the vehicle with a steering angle determined according to the distance. According to this configuration, for example, the forward travel stop position in the forward parking route is set to the position that allows the vehicle to be guided to a position close to directly facing the parking space by turning the vehicle with the steering angle determined according to the distance between the vehicle stopped at the forward travel stop position and the entry-side end of the vehicle into the parking space. The vehicle is guided in reverse from the forward travel stop position to the position close to directly facing the parking space, and is then guided forward into the parking space. Accordingly, when parking the vehicle forward into the parking space, the vehicle can be efficiently guided, and the parking of the vehicle is less likely to be affected even when another vehicle is parked on either side of the parking space. Since the forward travel stop position is not located too far forward, it is possible to reduce the feeling of strangeness toward the parking of the vehicle as viewed from the following vehicle. In the park assist device according to the present invention, for example, a reversing completion position of the guiding the vehicle in reverse may be set to such a position that a reference position for guidance of the vehicle is included in a steering wheel turning area having a same width as the parking space and connecting to the parking space. In the park assist device according to the present invention, for example, the steering angle may be a steering angle that provides a minimum turning radius within such a steering angle range that the vehicle does not come into contact with another vehicle.

In the park assist device according to the present invention, for example, the route setting unit sets a route so that clearance to another vehicle parked on either side of the parking space is changed when a detector mounted on the vehicle detects that part of the other vehicle and the vehicle are located next to each other inside the parking space while guiding the vehicle forward into the parking space. For example, the park assist device can thus reduce the possibility of the parking of the vehicle being affected by the other vehicle parked on either side of the parking space.

In the park assist device of the present invention, for example, the reference position of the vehicle may be a middle of a rear wheel axle of the vehicle.

In the park assist device of the present invention, for example, a middle of a front wheel axle of the vehicle is located in the steering wheel turning area when the reversing of the vehicle is completed. The park assist device can thus efficiently guide the vehicle.

In the park assist device of the present invention, for example, the route setting unit secures the distance that allows the vehicle to be turned with the steering angle so that the reference position of the vehicle and a middle of a front wheel axle of the vehicle are located in the steering wheel turning area. The park assist device can thus efficiently guide the vehicle.

A program according to the present invention causes, for example, a computer to function as: a route setting means for setting a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and a guidance control means for guiding the vehicle according to the parking route. The forward travel stop position is set to a position that allows the vehicle to be guided so as to be parked in the forward travel attitude into the parking space after the guiding the vehicle in reverse by turning the vehicle with a steering angle determined according to a distance between the vehicle stopped at the forward travel stop position and an entry-side end of the vehicle into the parking space. According to this configuration, for example, the forward travel stop position in the forward parking route is set to the position that allows the vehicle to be guided to a position close to directly facing the parking space by turning the vehicle with the steering angle determined according to the distance between the vehicle stopped at the forward travel stop position and the entry-side end of the vehicle into the parking space. The vehicle is guided in reverse from the forward travel stop position to the position close to directly facing the parking space, and is then guided forward into the parking space. Accordingly, when parking the vehicle forward into the parking space, the vehicle can be efficiently guided, and the parking of the vehicle is less likely to be affected even when another vehicle is parked on either side of the parking space. Since the forward travel stop position is not located too far forward, it is possible to reduce the feeling of strangeness toward the parking of the vehicle as viewed from the following vehicle.

A park assist method of the present invention is, for example, a park assist method that is performed by a park assist device, the park assist method including: a route setting step of setting a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and a guidance control step of guiding the vehicle according to the parking route. The forward travel stop position is set to a position that allows the vehicle to be guided so as to be parked in the forward travel attitude into the parking space after the guiding the vehicle in reverse by turning the vehicle with a steering angle determined according to a distance between the vehicle stopped at the forward travel stop position and an entry-side end of the vehicle into the parking space. According to this configuration, for example, the forward travel stop position in the forward parking route is set to the position that allows the vehicle to be guided to a position close to directly facing the parking space by turning the vehicle with the steering angle determined according to the distance between the vehicle stopped at the forward travel stop position and the entry-side end of the vehicle into the parking space. The vehicle is guided in reverse from the forward travel stop position to the position close to directly facing the parking space, and is then guided forward into the parking space. Accordingly, when parking the vehicle forward into the parking space, the vehicle can be efficiently guided, and the parking of the vehicle is less likely to be affected even when another vehicle is parked on either side of the parking space. Since the forward travel stop position is not located too far forward, it is possible to reduce the feeling of strangeness toward the parking of the vehicle as viewed from the following vehicle.

### BRIEF DESCRIPTION OF THE DRAWINGS

[FIG. 1] FIG. 1 is a diagram schematically illustrating a parking system according to an embodiment.
[FIG. 2] FIG. 2 is a block diagram illustrating a control system of the parking system.
[FIG. 3] FIG. 3 is a functional block diagram illustrating functions of the parking system.
[FIG. 4] FIG. 4 is a diagram showing an example of a parking lot database.
[FIG. 5] FIG. 5 is a flowchart showing the flow of a parking process that is performed by the parking system.
[FIG. 6] FIG. 6 is a diagram showing an example of performing forward parking of a vehicle.
[FIG. 7] FIG. 7 is a diagram showing a comparative example of forward parking of a vehicle.
[FIG. 8] FIG. 8 is a diagram showing an example of changing the clearance to another vehicle.

### MODES FOR CARRYING OUT THE INVENTION

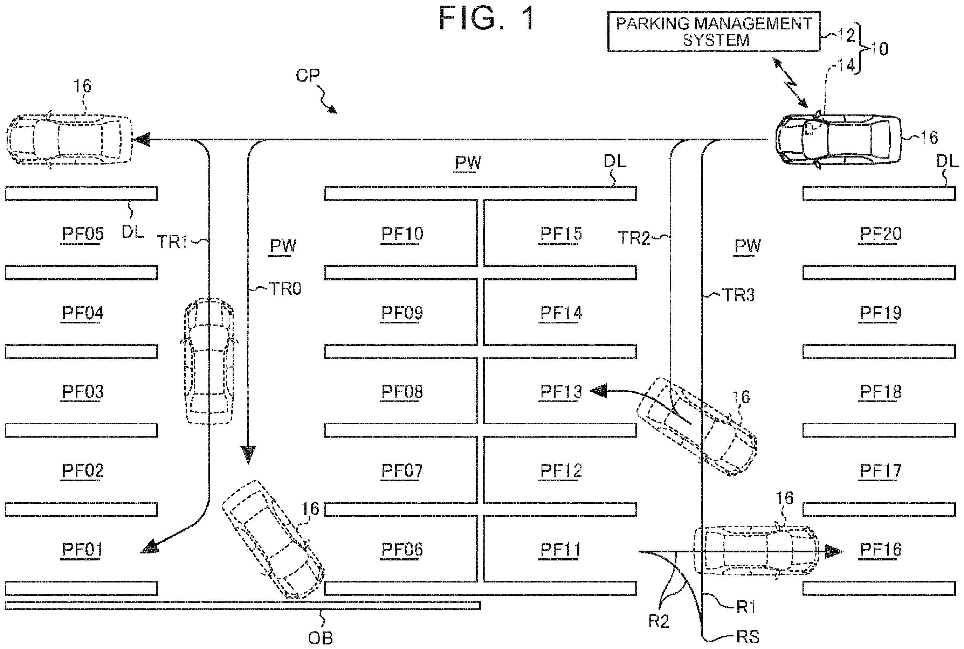

FIG. 1 is a diagram schematically illustrating a parking system 10 according to an embodiment. The parking system 10 assists in parking in a parking lot CP for parking a vehicle 16, such automated valet parking.

For example, the parking lot CP includes a plurality of parking spots PF01, PF02, ..., and PF20 that are parking spaces separated by a plurality of parking markings DL on a road surface, and aisles PW for traveling to the parking spots. The parking spots PF01, PF02, ..., and PF20 will be referred to as the parking spots PF when it is not necessary to distinguish them from each other.

For example, the vehicle 16 may be a motor vehicle (internal combustion engine motor vehicle) that uses an internal combustion engine (engine, not shown) as a driving source, may be a motor vehicle (battery electric vehicle, fuel cell electric vehicle, etc.) that uses an electric motor (motor, not shown) as a driving source, or may be a motor vehicle (hybrid electric vehicle) that uses both of these as driving sources.

As shown in FIG. 1, the parking system 10 includes a parking management system 12 installed in a management facility etc. for the parking lot CP, and a park assist system 14 mounted on the vehicle 16. The parking management system 12 sets a travel method to a target parking spot set from any one of the plurality of parking spots PF to either forward travel or reverse travel. The travel method may include, for example, a method for entering an aisle PW that faces one side of the target parking spot and where the vehicle 16 travels when parking in the target parking spot. The travel method may be, for example, a method for traveling at least from a corner before the target parking spot in the parking lot CP to the target parking spot. In other words, the travel method may be a method for traveling at least from the last corner on a route to the target parking spot to the target parking spot. Alternatively, the travel method may be, for example, a method for traveling in an aisle PW before a longitudinal extension of the target parking spot on the route to the target parking spot (i.e., from the last corner on the route to the extension). The travel method to the target parking spot may be a travel method to near the target parking spot.

The parking management system 12 sets, in addition to the travel method, a parking method after traveling to the target parking spot, namely a parking method to a target parking position set inside the target parking spot, to either forward parking or reverse parking. For example, the parking management system 12 sets the parking spot PF01 where reverse parking is possible as the target parking spot. In this case, there is a wall obstacle OB next to the parking spot PF01 located in the back of the parking lot CP. When the vehicle 16 travels forward to the parking spot PF01 as shown by a parking route TR0, the vehicle 16 is unable to reverse park or it is difficult for the vehicle 16 to reverse park. In such a case, the parking management system 12 sets reverse driving as the travel method to the target parking spot, as shown by a parking route TR1.

When the parking management system 12 sets the parking spot PF13 that is easy to back into after traveling forward as the target parking spot, the parking management system 12 sets forward travel as the travel method to the target parking spot, as shown by a parking route TR2.

When the parking management system 12 sets the parking spot PF16 where reverse parking is not allowed by the rules etc. of the parking lot CP as the target parking spot, the parking management system 12 sets forward parking as the parking method and forward travel as the travel method, as shown by a parking route TR3.

The parking management system 12 sets recommended parking information including the target parking spot, the target parking position, the travel method, and the parking method, and sends it to the park assist system 14 by wireless communication.

The park assist system 14 is mounted on the vehicle 16 and is connected to the parking management system 12 by wireless communication etc. so that the park assist system 14 can receive information such as the recommended parking information. The park assist system 14 generates, based on the recommended parking information received from the parking management system 12, the parking route TR2, TR3, etc. to the target parking position inside the target parking spot as a parking route, and autonomously drives the vehicle 16 along the parking route to park the vehicle 16 at the target parking position.

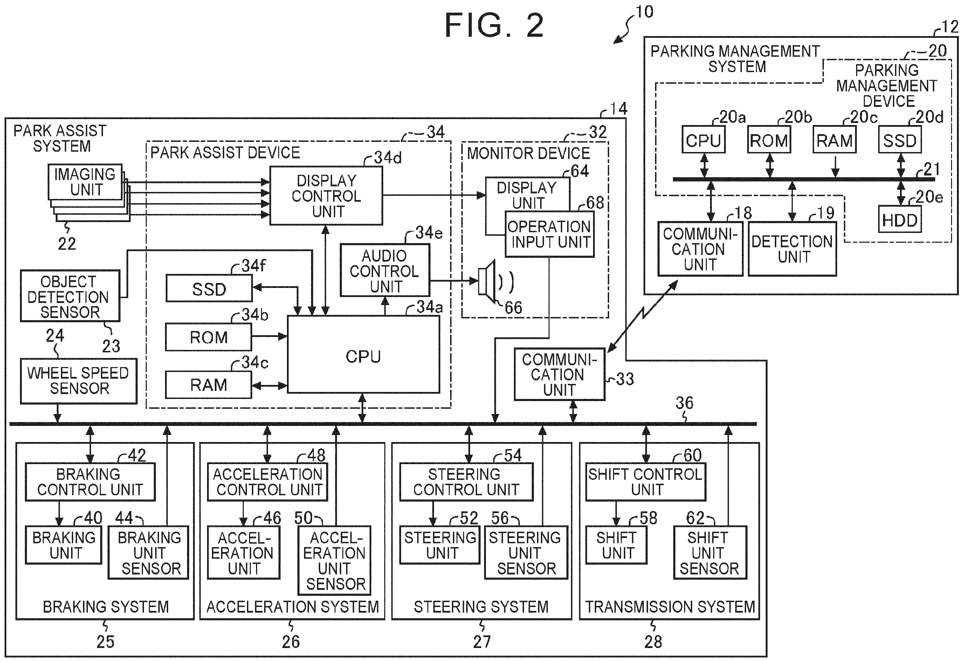

FIG. 2 is a block diagram illustrating a control system of the parking system 10.

First, the parking management system 12 will be described.

As shown in FIG. 2, the parking management system 12 includes a communication unit 18, a detection unit 19, and a parking management device 20.

The communication unit 18 sends and receives information to and from an external device such as the park assist system 14 by wireless communication etc. The communication unit 18 is connected to the parking management device 20 so that the communication unit 18 can send and receive information to and from the parking management device 20. The communication unit 18 thus relays communication between the parking management device 20 and the park assist system 14.

The detection unit 19 generates and outputs on-site information indicating the situation inside the parking lot CP in order to detect detection targets. The detection targets include moving objects and stationary objects inside the parking lot CP. The moving obj ects are obj ects moving inside the parking lot CP, and include, for example, other vehicles and people. The stationary objects include obstacles OB such as walls.

The detection unit 19 is, for example, one or more digital cameras containing an imaging element such as a CCD (Charge Coupled Device) or a CIS (CMOS Image Sensor). The detection unit 19 outputs video data including a plurality of frame images generated at a predetermined frame rate or still image data to the parking management device 20 as the on-site information. It is preferable that each detection unit 19 include a wide-angle lens or a fisheye lens and can capture an angle of view in the range of 140° to 190° in the horizontal direction. The detection unit 19 generates data of a captured image of the entire area of the parking lot CP captured from above as the on-site information.

The detection unit 19 may include an ultrasonic sonar or distance sensor that detects the distance to a detection target and output a distance image as the on-site information.

The detection unit 19 is connected to the parking management device 20 so that the detection unit 19 can send and receive information to and from the parking management device 20. The detection unit 19 outputs the generated on-site information to the parking management device 20.

The parking management device 20 is an example of a parking device, and manages parking of the vehicle 16 in the parking lot CP. The parking management device 20 is, for example, a computer. The parking management device 20 includes a CPU (Central Processing Unit) 20a, a ROM (Read Only Memory) 20b, a RAM (Random Access Memory) 20c, an SSD (Solid State Drive) 20d, an HDD (Hard Disk Drive) 20e, and a bus 21.

The CPU 20a is an example of a hardware processor, and reads programs stored in nonvolatile storage devices such as the SSD 20d and the HDD 20e and executes various types of arithmetic processing and control according to the programs. For example, the CPU 20a performs a parking management process for managing parking of the vehicle 16.

The ROM 20b stores programs and parameters necessary to execute the programs. The RAM 20c temporarily stores various types of data to be used in calculations by the CPU 20a. The SSD 20d and the HDD 20e are rewritable nonvolatile storage devices, and retain data even when the parking management device 20 is powered off.

The bus 21 connects the CPU 20a, the ROM 20b, the RAM 20c, the SSD 20d, the HDD 20e, the communication unit 18, and the detection unit 19 so that they can send and receive information to and from each other.

Next, the park assist system 14 will be described.

The park assist system 14 includes a plurality of (e.g., four) imaging units 22, a wheel speed sensor 24, a braking system 25, an acceleration system 26, a steering system 27, a transmission system 28, a monitor device 32, a communication unit 33, a park assist device 34, and an in-vehicle network 36.

The plurality of imaging units 22 is, for example, digital cameras that are the same as the detection unit 19 described above. The plurality of imaging units 22 is placed around the vehicle 16 and functions as MVCs (Multi View Cameras). For example, the plurality of imaging units 22 are placed on the front and rear right and left sides of the vehicle 16. This allows the plurality of imaging units 22 to capture images in almost all directions around the vehicle 16. The optical axes of the imaging units 22 are set to be obliquely downward. Therefore, the imaging units 22 captures images of the surroundings of the vehicle 16 including surrounding objects and a road surface with the parking markings DL separating the parking spots PF. The imaging units 22 output data of the captured images to the park assist device 34 as surroundings information.

The park assist system 14 may include, in addition to the imaging units 22, an object detection sensor 23 that is a detector such as an ultrasonic sonar or distance sensor that detects the distance to a detection target, and may output the distance to the detection target to the park assist device 34 as the surroundings information.

The wheel speed sensor 24 includes a Hall element mounted near a wheel of the vehicle 16. The wheel speed sensor 24 detects the amount of rotation of the wheel or the number of rotations per unit time. The wheel speed sensor 24 detects and outputs wheel rotation information indicating the number of wheel speed pulses corresponding to the amount of rotation or number of rotations.

The braking system 25 controls deceleration of the vehicle 16. The braking system 25 includes a braking unit 40, a braking control unit 42, and a braking unit sensor 44. The braking unit 40 is, for example, a device that includes a brake, a brake pedal, etc. and that decelerates the vehicle 16. The braking control unit 42 is, for example, a computer including a microcomputer such as an ECU (Electronic Control Unit) having a hardware processor such as a CPU. The braking control unit 42 controls the braking unit 40 based on instructions from the park assist device 34 to control deceleration of the vehicle 16. The braking unit sensor 44 is, for example, a position sensor. When the braking unit 40 is a brake pedal, the braking unit sensor 44 detects the position of the braking unit 40. The braking unit sensor 44 outputs braking unit position information indicating the detected position of the braking unit 40 to the in-vehicle network 36.

The acceleration system 26 controls acceleration of the vehicle 16. The acceleration system 26 includes an acceleration unit 46, an acceleration control unit 48, and an acceleration unit sensor 50. The acceleration unit 46 is, for example, a device that includes an accelerator pedal etc. and that accelerates the vehicle 16. The acceleration control unit 48 is, for example, a computer including a microcomputer such as an ECU having a hardware processor such as a CPU. The acceleration control unit 48 controls the acceleration unit 46 based on instructions from the park assist device 34 to control acceleration of the vehicle 16. The acceleration unit sensor 50 is, for example, a position sensor. When the acceleration unit 46 is an accelerator pedal, the acceleration unit sensor 50 detects the position of the acceleration unit 46. The acceleration unit sensor 50 outputs acceleration unit position information indicating the detected position of the acceleration unit 46 to the in-vehicle network 36.

The steering system 27 controls the direction of travel of the vehicle 16. The steering system 27 includes a steering unit 52, a steering control unit 54, and a steering unit sensor 56. The steering unit 52 is, for example, a device that includes a steering wheel etc. and that operates steered wheels (e.g., front wheels) of the vehicle 16. The steering control unit 54 is, for example, a computer including a microcomputer such as an ECU having a hardware processor such as a CPU. The steering control unit 54 controls the steering unit 52 based on an instructed steering angle from the park assist device 34 to control the lateral direction of travel of the vehicle 16. The steering unit sensor 56 is, for example, an angle sensor including a Hall element etc., and outputs the position in the rotational direction (e.g., rotation angle) of the steering unit 52. The steering unit sensor 56 outputs steering angle information indicating the detected rotation angle of the steering unit 52 to the in-vehicle network 36.

The transmission system 28 controls the speed ratio of the vehicle 16. The transmission system 28 includes a shift unit 58, a shift control unit 60, and a shift unit sensor 62. The shift unit 58 includes, for example, a device that includes a shift lever etc. and that switches the speed ratio of the vehicle 16 and the longitudinal direction of travel of the vehicle 16. The shift control unit 60 is, for example, a computer including a microcomputer such as an ECU having a hardware processor such as a CPU. The shift control unit 60 controls the shift unit 58 based on instructions from the park assist device 34 to control the speed ratio of the vehicle 16 or the longitudinal direction of travel of the vehicle 16. The shift unit sensor 62 detects the position of the shift unit 58 such as drive, parking, and reverse. The shift unit sensor 62 outputs shift unit position information indicating the detected position of the shift unit 58 to the in-vehicle network 36.

The monitor device 32 is installed on a dashboard etc. inside a cabin of the vehicle 16. The monitor device 32 includes a display unit 64, an audio output unit 66, and an operation input unit 68.

The display unit 64 displays an image based on image data sent from the park assist device 34. The display unit 64 is, for example, a display device such as a liquid crystal display or an organic EL (Electro Luminescence) display. For example, the display unit 64 displays images related to parking assistance.

The audio output unit 66 outputs audio based on audio data sent from the park assist device 34. The audio output unit 66 is, for example, a speaker. For example, the audio output unit 66 outputs audio related to parking assistance.

The operation input unit 68 receives inputs from an occupant. The operation input unit 68 is, for example, a touch panel. The operation input unit 68 is provided on a display screen of the display unit 64. The operation input unit 68 is configured to transmit an image displayed by the display unit 64 therethrough. The operation input unit 68 thus allows the occupant to see the image displayed on the display screen of the display unit 64. The operation input unit 68 receives an instruction input by the occupant by touching the position corresponding to the image displayed on the display screen of the display unit 64, and sends the instruction to the park assist device 34. For example, the operation input unit 68 receives an input regarding driver assistance, such as designation of a target parking spot in parking assistance. The operation input unit 68 is not limited to the touch panel, and may be a hard switch such as a push button switch.

The communication unit 33 sends and receives information to and from an external device such as the parking management system 12 by wireless communication etc. The communication unit 33 is connected to the park assist device 34 via the in-vehicle network 36 so that the communication unit 33 can send and receive information to and from the park assist device 34. The communication unit 33 thus relays communication between the park assist device 34 and the parking management system 12.

The park assist device 34 is a computer including a microcomputer such as an ECU. The park assist device 34 acquires data such as captured images from the imaging units 22 and the distance to a detection target from the object detection sensor 23. The park assist device 34 sends data related to an image or audio generated based on the captured images etc. to the monitor device 32. The park assist device 34 sends data related to an image or audio such as an instruction to a driver and a notification to the driver to the monitor device 32. The park assist device 34 autonomously drives the vehicle 16 based on the recommended parking information acquired from the parking management system 12 and parks the vehicle 16 at the target parking position inside the target parking spot.

The park assist device 34 includes a CPU 34a, a ROM 34b, a RAM 34c, a display control unit 34d, an audio control unit 34e, and an SSD 34f. The CPU 34a, the ROM 34b, and the RAM 34c may be integrated in the same package.

The CPU 34a is an example of a hardware processor, and reads programs stored in nonvolatile storage devices such as the ROM 34b and executes various types of arithmetic processing and control according to the programs. For example, the CPU 34a executes an autonomous driving process of parking assistance.

The ROM 34b stores programs and parameters necessary to execute the programs. The RAM 34c temporarily stores various types of data to be used in calculations by the CPU 34a. Of the arithmetic processing in the park assist device 34, the display control unit 34d mainly performs image processing of images obtained by the imaging units 22, data conversion of a display image to be displayed on the display unit 64, etc. Of the arithmetic processing in the park assist device 34, the audio control unit 34e mainly performs processing of audio to be output from the audio output unit 66. The SSD 34f is a rewritable nonvolatile storage device, and retain data even when the park assist device 34 is powered off.

The in-vehicle network 36 connects the wheel speed sensor 24, the braking system 25, the acceleration system 26, the steering system 27, the transmission system 28, the operation input unit 68 of the monitor device 32, and the park assist device 34 to each other so that these components can send and receive information to and from each other.

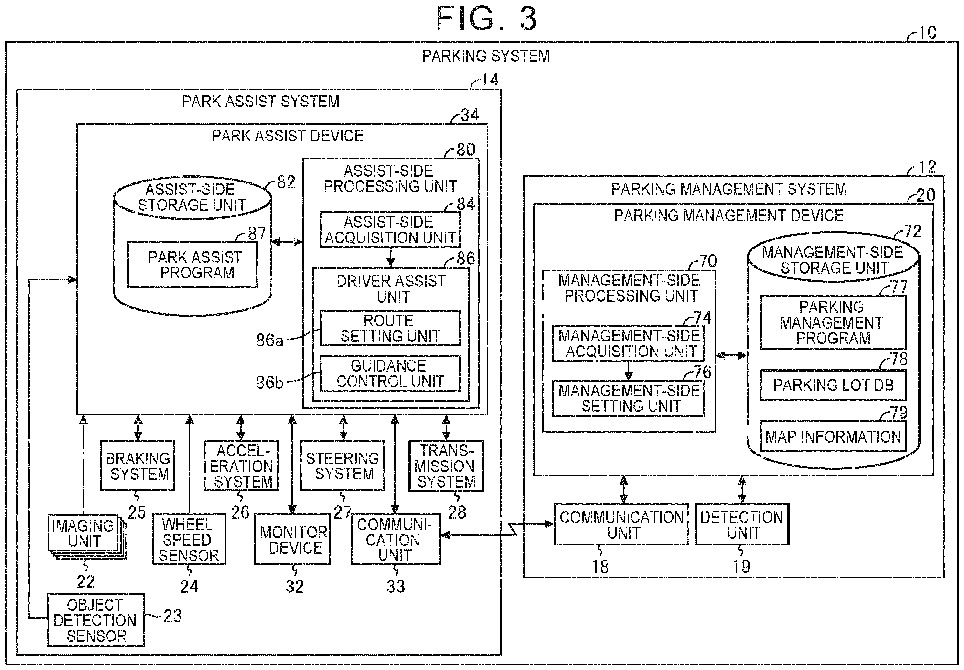

FIG. 3 is a functional block diagram illustrating functions of the parking system 10.

First, functions of the parking management device 20 will be described.

As shown in FIG. 3, the parking management device 20 includes a management-side processing unit 70 and a management-side storage unit 72.

For example, the management-side processing unit 70 is implemented as a function of the CPU 20a. The management-side processing unit 70 includes a management-side acquisition unit 74 and a management-side setting unit 76. For example, the management-side processing unit 70 may function as the management-side acquisition unit 74 and the management-side setting unit 76 by reading a parking management program 77 stored in the management-side storage unit 72. Part or all of the management-side acquisition unit 74 and the management-side setting unit 76 may be circuitry such as an ASIC (Application Specific Integrated Circuit) and an FPGA (Field-Programmable Gate Array).

The management-side acquisition unit 74 acquires preset parking spot information, namely information on one or more parking spots PF, from a parking lot database (DB: Data Base) 78 stored in the management-side storage unit 72. For example, when the management-side acquisition unit 74 determines based on the on-site information acquired from the detection unit 19 that the vehicle 16 has entered the parking lot CP, the management-side acquisition unit 74 acquires from the parking lot database 78 of the management-side storage unit 72 parking spot information on one or more vacant parking spots of the parking spots PF where the vehicle 16 is not parked. The management-side acquisition unit 74 acquires from the management-side storage unit 72 map information 79 indicating the positions of roads, parking spots PF, parking positions, obstacles OB, etc. in the parking lot CP. The parking spot information and the map information 79 are examples of parking lot information. The management-side acquisition unit 74 acquires from the detection unit 19 the on-site information obtained by capturing an image inside the parking lot CP.

The management-side acquisition unit 74 outputs the acquired parking spot information, map information 79, and on-site information to the management-side setting unit 76.

When the management-side setting unit 76 acquires the parking spot information, the map information 79, and the on-site information from the management-side acquisition unit 74, the management-side setting unit 76 generates recommended parking information indicating the travel method and the parking method. Specifically, the management-side setting unit 76 selects a target parking spot where the subject vehicle 16 is to be parked from the acquired parking spot information on the plurality of parking spots. For example, the management-side setting unit 76 may set the target parking spot based on a predetermined setting condition. The predetermined setting condition is, for example, setting the parking spot PF closest to the entrance of the parking lot CP as a target parking spot, setting the parking spot PF with vacant parking spots PF on both sides as a target parking spot, etc.

The management-side setting unit 76 may display vacant parking spots PF on the monitor device 32 of the vehicle 16 and allow an occupant such as the driver to select a target parking spot.

The management-side setting unit 76 sets the travel method to the target parking spot from forward travel and reverse travel, based on the parking spot information on the selected target parking spot. The management-side setting unit 76 may set, in addition to the travel method, the parking method to the target parking position inside the target parking spot from forward parking and reverse parking, based on the parking spot information on the target parking spot. The management-side setting unit 76 generates recommended parking information indicating the position of the target parking spot, the target parking position, the travel method, and the parking method. The management-side setting unit 76 sends the recommended parking information, the on-site information, and the map information 79 to the park assist device 34 of the vehicle 16.

The management-side storage unit 72 is implemented as functions of the ROM 20b, RAM 20c, SSD 20d, and HDD 20e.

The management-side storage unit 72 stores programs to be executed by the management-side processing unit 70, data necessary to execute the programs, data generated by executing the programs, etc. For example, the management-side storage unit 72 stores the parking management program 77 to be executed by the management-side processing unit 70. The parking management program 77 may be provided by a computer readable storage medium such as a CD-ROM (Compact Disc Read Only Memory) or a DVD-ROM (Digital Versatile Disc Read Only Memory), or may be provided via a network such as the Internet. The management-side storage unit 72 stores the parking lot database 78 and map information 79 that are necessary when executing the parking management program 77. The map information 79 includes position information of the parking spots in the parking lot CP and the aisles PW to the parking spots, etc. The management-side storage unit 72 temporarily stores the target parking spot, target parking position, travel method, parking method, etc. generated by execution of the parking management program 77.

Next, functions of the park assist device 34 will be described.

The park assist device 34 includes an assist-side processing unit 80 and an assist-side storage unit 82.

For example, the assist-side processing unit 80 is implemented as a function of the CPU 34a. The assist-side processing unit 80 includes an assist-side acquisition unit 84 and a driver assist unit 86. The assist-side processing unit 80 may function as the assist-side acquisition unit 84 and the driver assist unit 86 by reading a park assist program 87. Part or all of the assist-side acquisition unit 84 and the driver assist unit 86 may be circuitry such as an ASIC and an FPGA.

The assist-side acquisition unit 84 acquires recommended parking information indicating the travel method and the parking method from the parking management device 20. The assist-side acquisition unit 84 outputs the acquired recommended parking information to the driver assist unit 86.

The driver assist unit 86 autonomously drives the vehicle 16 based on the acquired recommended parking information and map information 79 to park the vehicle 16 at the target parking position in the target parking spot. Specifically, the driver assist unit 86 includes a route setting unit 86a and a guidance control unit 86b. The route setting unit 86a of the driver assist unit 86 sets a parking route based on the travel method and parking method indicated by the acquired recommended parking information. For example, when the recommended parking information indicates forward travel and forward parking, the route setting unit 86a generates, by a method that will be described later, a parking route connecting a route to either the target parking spot or near the target parking spot by forward travel and a route to the target parking position by forward parking.

The guidance control unit 86b of the driver assist unit 86 acquires vehicle information such as wheel rotation information, braking unit position information, acceleration unit position information, steering angle information, and shift unit position information from the wheel speed sensor 24 and the systems 25, 26, 27, and 28. The guidance control unit 86b of the driver assist unit 86 outputs to the control units 42, 48, 54, and 60 control instructions to control the braking unit 40, the acceleration unit 46, the steering unit 52, and the shift unit 58, based on the vehicle information and the parking route. The guidance control unit 86b of the driver assist unit 86 thus autonomously drives the vehicle 16 to the target parking position.

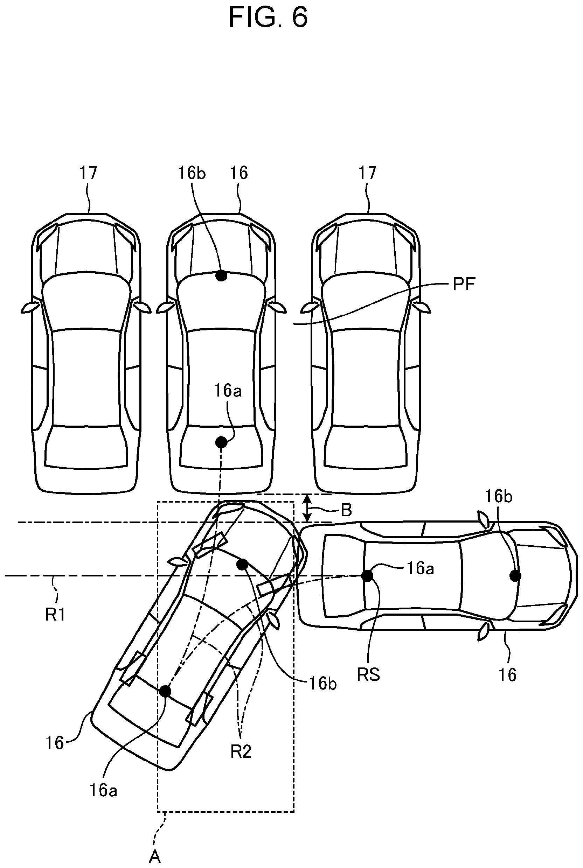

The assist-side storage unit 82 is implemented as functions of the ROM 34b, RAM 34c, and SSD 34f. The assist-side storage unit 82 stores programs to be executed by the assist-side processing unit 80, data necessary to execute the programs, data generated by executing the programs, etc. The assist-side storage unit 82 stores, for example, the park assist program 87 to be executed by the assist-side processing unit 80. The park assist program 87 may be provided by a computer readable storage medium such as a CD-ROM or a DVD-ROM, or may be provided via a network such as the Internet. The assist-side storage unit 82 stores data such as the recommended parking information necessary to execute the park assist program 87. The assist-side storage unit 82 temporarily stores data such as a parking route generated by execution of the park assist program 87 and a vehicle reference position 16a of the vehicle 16 (e.g., the middle of the rear wheel axle of the vehicle 16) (see FIG. 6) that is used as a reference when guiding the vehicle 16. The vehicle reference position 16a of the vehicle 16 that is used as a reference when guiding the vehicle 16 may be other than the middle of the rear wheel axle.

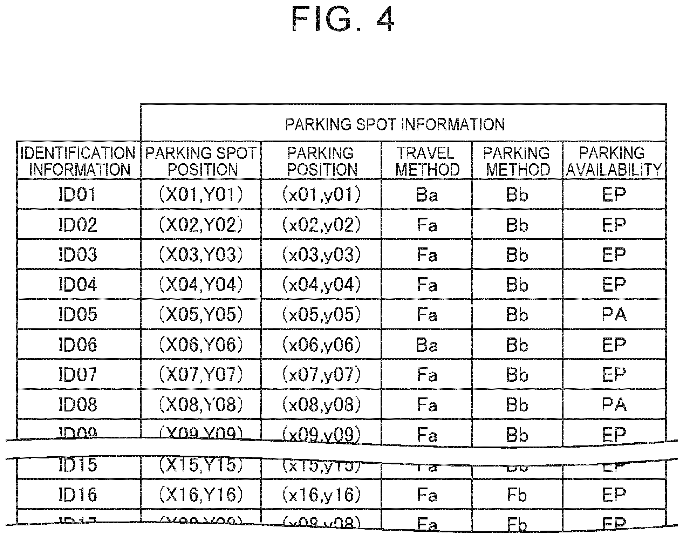

FIG. 4 is a diagram showing an example of the parking lot database 78.

As shown in FIG. 4, the parking lot database 78 associates identification information with parking spot information. The parking spot information includes the parking spot position, the parking position, the travel method, the parking method, and parking availability.

The identification information is identification for identifying the parking spot PF, and different information such as ID01, ID02, ... is given to each parking spot PF. For example, identification information ID01, ID02, ..., and ID16 is assigned to the parking spots PF01, PF02, ..., PF16, respectively.

The parking spot position is the position of the parking spot PF in the parking lot CP, and may be coordinate information using a reference position in the parking lot CP as the origin, such as (X01, Y01), (X02, Y02), .... The parking spot position may include four pieces of coordinate information indicating the positions of the four corners of the parking spot PF. The parking position is a position inside the parking spot PF that serves as a target with which the vehicle reference position 16a of the vehicle 16 (e.g., the middle of the rear wheel axle of the vehicle 16) is to be aligned, and may be coordinate information such as (x01, y01), (x02, y02), .... The parking position may be coordinate information using the reference position in the parking lot CP as the origin like the parking spot position, or may be coordinate information using the parking spot position as the origin. The parking position may be four pieces of coordinate information indicating the positions of the four corners of the parking spot PF.

The travel method is information indicating a possible travel method to the parking spot PF. For example, for the travel method, "Fa" indicating forward travel is assigned to those parking spots PF where parking by forward travel is possible. When parking by forward travel is not possible due to an obstacle OB etc., "Ba" indicating reverse travel is assigned to those parking spots PF where parking by reverse travel is possible. In other words, forward travel is preferentially assigned to the travel method over reverse travel.

The parking method is information indicating a possible parking method from near a parking spot PF to the parking position in that parking spot PF. For example, for the parking method, "Bb" indicating reverse parking is assigned to those parking spots PF where reverse parking is possible, and "Fb" indicating forward parking is assigned to those parking spots PF where reverse parking is not allowed by rules etc. In other words, reverse parking is preferentially assigned to the parking method over forward parking.

The parking availability is information indicating whether the parking spots PF are vacant, and either "EP" indicating vacant or "PA" indicating occupied is assigned to the parking spots PF. The management-side setting unit 76 may update the parking availability based on the on-site information that is a captured image of the parking lot CP detected by the detection unit 19.

When the vehicle 16 enters the parking lot CP, the management-side acquisition unit 74 acquires from the parking lot database 78 parking spot information on one or more parking spots whose parking availability is "EP," and outputs the parking spot information to the management-side setting unit 76. The management-side acquisition unit 74 may acquire the parking spot information on one or more parking spots whose parking availability is "EP," after updating the parking availability of the parking spot information on all the parking spots in the parking lot database 78 based on the on-site information acquired from the detection unit 19.

The management-side setting unit 76 selects a target parking spot from the parking spot information on the plurality of parking spots PF acquired from the management-side acquisition unit 74. The management-side setting unit 76 sets the travel method and the parking method based on the parking spot information on the target parking spot. For example, when the management-side setting unit 76 sets the parking spot PF01 whose identification information is "ID01" as a target parking spot, the management-side setting unit 76 sets reverse travel as the travel method in the parking lot database 78 indicates "Ba," and sets reverse parking as the parking method in the parking lot database 78 indicates "Bb." When the management-side setting unit 76 sets the parking spot PF04 whose identification information is "ID04" as a target parking spot, the management-side setting unit 76 sets forward travel as the travel method in the parking lot database 78 indicates "Fa," and sets reverse parking as the parking method in the parking lot database 78 indicates "Bb." When the management-side setting unit 76 sets the parking spot PF16 whose identification information is "ID16" as a target parking spot, the management-side setting unit 76 sets forward travel as the travel method in the parking lot database 78 indicates "Fa," and sets forward parking as the parking method in the parking lot database 78 indicates "Fb."

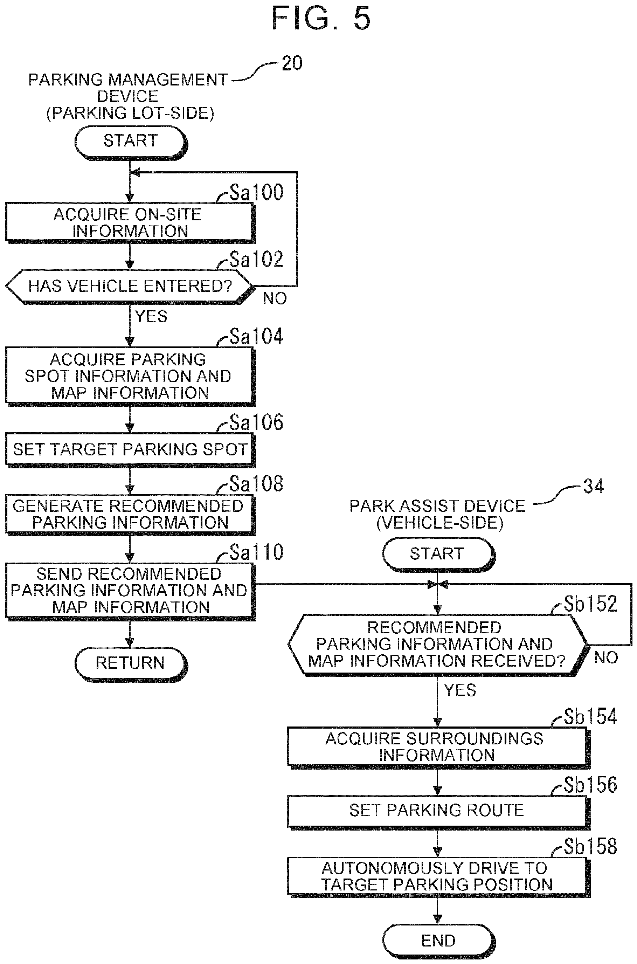

FIG. 5 is a flowchart showing the flow of a parking process that is performed by the parking system 10. The left diagram in FIG. 5 is a flowchart of the parking management process that is performed by the parking management device 20. The right diagram in FIG. 5 is a flowchart of a park assist process that is performed by the park assist device 34.

As shown in the left diagram in FIG. 5, in the parking management process of the parking process, the management-side acquisition unit 74 of the parking management device 20 installed in the parking lot CP acquires a captured image inside the parking lot CP as on-site information from the detection unit 19 (Sa100). The management-side acquisition unit 74 determines whether a new vehicle 16 has entered the parking lot CP (Sa102). For example, the management-side acquisition unit 74 may determine whether a new vehicle 16 has entered the parking lot CP based on the on-site information that is a captured image of the parking lot CP acquired from the detection unit 19. The management-side acquisition unit 74 is in a standby state until a new vehicle 16 enters the parking lot CP (Sa102: No).

When the management-side acquisition unit 74 determines that a new vehicle 16 has entered the parking lot CP (Sa102: Yes), the management-side acquisition unit 74 acquires the parking spot information on one or more vacant parking spots in the parking lot database 78 and the map information 79 from the management-side storage unit 72, and outputs the parking spot information and the map information 79 together with the on-site information to the management-side setting unit 76 (Sa104).

The management-side setting unit 76 sets a target parking spot based on the acquired parking spot information (Sa106). For example, the management-side setting unit 76 may set the parking spot PF closest to the entrance of the parking lot CP among the vacant parking spots PF as a target parking spot.

The management-side setting unit 76 generates recommended parking information indicating the position of the target parking spot, the target parking position, the travel method, and the parking method (Sa108). Specifically, the management-side setting unit 76 sets the travel method and parking method indicated by the parking spot information on the target parking spot as a travel method and parking method to the target parking spot, and generates recommended parking information including the target parking spot, the target parking position, the travel method, and the parking method. The management-side setting unit 76 sends the recommended parking information and the map information 79 via the communication unit 18 (Sa110). The parking management device 20 then repeats step Sa102 and the subsequent steps.

In the park assist process of the parking process, the assist-side acquisition unit 84 of the park assist device 34 mounted on the vehicle 16 determines whether the recommended parking information and the map information 79 have been received from the parking management device 20 via the communication unit 33 (Sb 152). The assist-side acquisition unit 84 is in a standby state until it acquires the recommended parking information (Sa152: No).

When the assist-side acquisition unit 84 acquires the recommended parking information and the map information 79 and outputs them to the driver assist unit 86 (Sb 152: Yes), the route setting unit 86a of the driver assist unit 86 acquires, as surroundings information on the surroundings of the vehicle 16, images of the surroundings of the vehicle 16 captured by the imaging units 22 (Sb 154). The route setting unit 86a of the driver assist unit 86 sets a parking route to the target parking position inside the target parking spot based on the surroundings information, the recommended parking information, and the map information 79 (Sb 156). For example, when the recommended parking information indicates forward travel and reverse parking, the route setting unit 86a of the driver assist unit 86 sets a parking route connecting a route to the target parking spot by forward travel and a route to the target parking position by reverse parking.

When the recommended parking information indicates forward travel and forward parking, the route setting unit 86a of the driver assist unit 86 sets a parking route connecting a forward parking route to the target parking spot by forward travel and a steering wheel turning parking route that is a route for guiding the vehicle 16 in reverse from a forward travel stop position in the forward parking route so that the vehicle reference position 16a is located inside a steering wheel turning area A (see FIG. 6) at the time the reversing is completed, and then guiding the vehicle 16 forward into the target parking spot, the steering wheel turning area A being an area having the same width as the target parking spot and connecting to the target parking spot. This will be described in detail later with reference to FIG. 6.

The guidance control unit 86b of the driver assist unit 86 controls the systems 25, 26, 27, and 28 to autonomously drive the vehicle 16 to the target parking position in the target parking spot along the set parking route and park the vehicle 16, based on the surroundings information and the map information 79 (Sb158).

As described above, the parking management device 20 sets, in the park assist device 34 of the vehicle 16, the recommended parking information including the travel method indicating either forward travel or reverse travel, based on the parking spot information. The parking management device 20 can thus reduce the possibility that the vehicle 16 having traveled to a target parking spot is unable to park due to the surrounding situation of the target parking spot such as an obstacle OB and therefore travels again to the target parking spot after returning to the original position. For example, the parking management device 20 can reduce situations where the vehicle 16 having traveled forward to a target parking spot is unable to park due to an obstacle OB etc. and therefore returns to the original position, changes the direction, and travels in reverse back to the target parking spot. As a result, the parking management device 20 can implement smooth parking of the vehicle 16 in the parking lot CP by reducing the possibility of the parking of the vehicle 16 being affected by the surrounding situation of the target parking spot, and can also reduce obstruction of parking of other vehicles. Congestion in the parking lot CP can thus be reduced.

The parking management device 20 sets the parking method indicating either forward parking or reverse parking. Since the parking management device 20 sends the recommended parking information indicating the parking method to the vehicle 16, the vehicle 16 can be properly parked according to the parking spot PF. This can reduce the possibility that the vehicle 16 of being parked again after being parked. In the parking management device 20, the parking lot database 78 preferentially assigns reverse parking to the parking method over forward parking. The parking management device 20 thus allows smoother guidance to the exit of the parking lot CP etc. as the number of parking spots PF the vehicle 16 can travel forward to leave is increased.

Since the parking management device 20 sets the travel method and the parking method and send them to the vehicle 16 as the recommended parking information, the park assist device 34 of the vehicle 16 need only generate a parking route according to the travel method and the parking method. This can reduce the load of the arithmetic processing for generating the parking route.

Since the method for entering an aisle PW that faces one side of the target parking spot and where the vehicle 16 travels when parking in the target parking spot is included, the parking management device 20 can cause the vehicle 16 to enter the aisle PW in an appropriate direction and travel to near the target parking spot.

When forward parking the vehicle 16 in a parking spot PF with another vehicle(s) 17 (see FIG. 6) parked on either side, it may not be possible to accurately park the vehicle 16 in the parking spot PF, depending on the situation of the vehicle(s) 17. This is because information the vehicle 16 can grasp on another vehicle(s) 17 is often unstable and may not match actual information, and the target position in the initial state often changes as the vehicle 16 gets to the latter half of the parking action.

Therefore, when forward parking the vehicle 16, the driver assist unit 86 of the park assist device 34 of the present embodiment sets a parking route to the target parking position inside the target parking spot (Sb 156), and accurately guides the vehicle 16 during autonomous driving of the vehicle 16 to the target parking position in the target parking spot along the set parking route (Sb 158). This will be specifically described below.

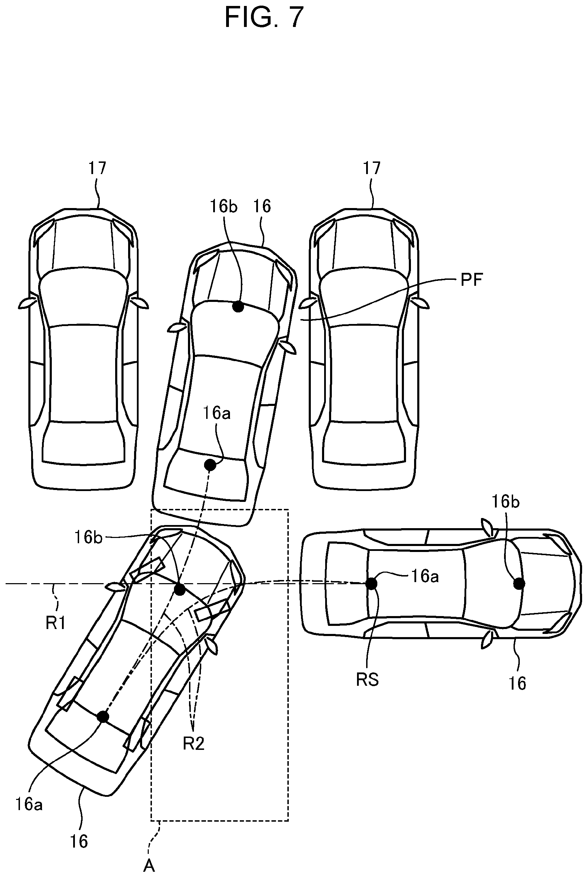

FIG. 6 is a diagram showing an example of forward parking of the vehicle 16, and FIG. 7 is a diagram showing a comparative example of forward parking of the vehicle 16.

As shown in FIG. 6, in the present embodiment, a route that accurately guides the vehicle 16 into the target parking spot is set by looking at a start position of a route immediately before the vehicle 16 enters the target parking spot when parking the vehicle 16 forward.

When the recommended parking information indicates forward travel and forward parking, the route setting unit 86a of the driver assist unit 86 sets a parking route R connecting a route to the target parking spot by forward travel and a route into the target parking spot by forward parking. As shown in FIG. 6, when the parking spot PF16 for which forward parking is set is set as a target parking spot, the parking route R is such that the vehicle 16 is first moved forward from a guidance start position and stopped at a forward travel stop position and is then guided so that the front part of the vehicle 16 is positioned for forward parking from the entrance of the parking spot PF16. In other words, the parking route R includes: a forward parking route R1 for guiding the vehicle 16 forward from the guidance start position; and a steering wheel turning parking route R2 for guiding the vehicle 16 in reverse and then forward from a forward travel stop position RS that is the end of the forward parking route R1 toward the parking spot PF16.

More specifically, the steering wheel turning parking route R2 is a route for guiding the vehicle 16 in reverse from the forward travel stop position RS in the forward parking route R1 so that the vehicle reference position 16a (e.g., the middle of the rear wheel axle of the vehicle 16) is located inside a steering wheel turning area A at the time the reversing is completed, and then guiding the vehicle 16 forward into the target parking spot, the steering wheel turning area A being an area having the same width as the target parking spot and connecting to the target parking spot.

FIG. 6 also shows the shortest steering wheel turning parking route R2 for guiding the vehicle 16 with a minimum number of forward and backward movements of the vehicle 16 when guiding the vehicle 16 in reverse from the forward travel stop position RS so that the vehicle reference position 16a (e.g., the middle of the rear wheel axle of the vehicle 16) is located inside the steering wheel turning area A at the time the reversing is completed. For example, the shortest steering wheel turning parking route R2 can be implemented by, when reversing the vehicle 16 along the steering wheel turning parking route R2, turning the vehicle 16 with a steering angle determined according to the distance B (approach distance) between the vehicle 16 stopped at the forward travel stop position RS and the entry-side end of the vehicle 16 into the target parking spot, that is, turning the vehicle 16 with a minimum turning radius within such a steering angle range that the vehicle 16 does not come into contact with another vehicle(s) 17. As described above, the forward travel stop position RS is such a position that allows the vehicle 16 to be guided so that the vehicle reference position 16a (e.g., the middle of the rear wheel axle of the vehicle 16) is located inside the steering wheel turning area A at the time the reversing of the vehicle 16 by turning with the steering angle is completed. The vehicle 16 can thus be efficiently guided. Since the forward travel stop position is not located too far forward, it is possible to reduce the feeling of strangeness toward parking of the vehicle 16 as viewed from the following vehicle.

FIG. 7 is a comparative example showing how the vehicle 16 is guided in reverse from the forward travel stop position so that the vehicle reference position 16a (e.g., the middle of the rear wheel axle of the vehicle 16) is located outside the steering wheel turning area A. Compared with the comparative example shown in FIG. 7, in the example shown in FIG. 6, the vehicle 16 is guided so that the vehicle reference position 16a of the vehicle 16 (e.g., the middle of the rear wheel axle of the vehicle 16) is located inside the steering wheel turning area A at the time the reversing is completed. The vehicle 16 can thus be located at a position as close as possible to directly facing the target parking spot. Therefore, the parking of the vehicle 16 is less likely to be affected even when another vehicle(s) 17 is parked on either side of the target parking spot.

In particular, in the example shown in FIG. 6, appropriately setting the forward travel stop position RS that is the end of the forward parking route R1 allows the vehicle 16 to be accurately guided so that the vehicle reference position 16a of the vehicle 16 (e.g., the middle of the rear wheel axle of the vehicle 16) is located within the steering wheel turning area A at the time the reversing is completed. As shown in FIG. 6, the middle 16b of the front wheel axle of the vehicle 16 is located in the steering wheel turning area A at the time the reversing of the vehicle 16 is completed. That is, the route setting unit 86a of the driver assist unit 86 secures such a distance B (approach distance) that allows the vehicle 16 to be turned with the steering angle so that the vehicle reference position 16a of the vehicle 16 (e.g., the middle of the rear wheel axle of the vehicle 16) and the middle 16b of the front wheel axle of the vehicle 16 are located in the steering wheel turning area A.

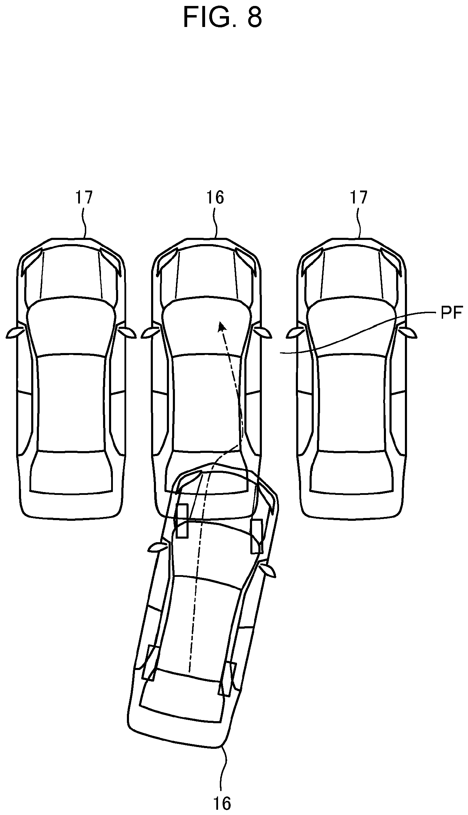

Since another vehicle(s) 17 parked on either side of the target parking spot changes, information the vehicle 16 can grasp on the vehicle(s) 17 is often unstable, and the target position in the initial state often changes as the vehicle 16 gets to the latter half of the parking action. Therefore, when guiding the vehicle 16 forward into the target parking spot, it is better not to aim too much from the beginning, as this can reduce the possibility of the parking of the vehicle 16 being affected by the vehicle(s) 17 parked on either side of the target parking spot. FIG. 8 is a diagram showing an example of changing the clearance to another vehicle 17. As shown in FIG. 8, the route setting unit 86a of the driver assist unit 86 may set a route so that the clearance to another vehicle 17 parked on either side of the target parking spot is changed when the object detection sensor 23 mounted on the vehicle 16 detects that part of the vehicle 17 parked on either side of the target parking spot and the vehicle 16 are located next to each other inside the parking space while guiding the vehicle 16 forward into the target parking spot. This can further reduce the possibility of the parking of the vehicle 16 being affected by the vehicle(s) 17 parked on either side of the target parking spot.

As described above, according to the present embodiment, the forward travel stop position in the forward parking route is set to a position that allows the vehicle 16 to be guided to a position close to directly facing the target parking spot by turning the vehicle 16 with the steering angle. The vehicle 16 is guided in reverse from the forward travel stop position to the position close to directly facing the target parking spot, and is then guided forward into the target parking spot. Accordingly, when parking the vehicle 16 forward into the target parking spot, the vehicle 16 can be efficiently guided, and the parking of the vehicle 16 is less likely to be affected even when another vehicle(s) 17 is parked on either side of the target parking spot. Since the forward travel stop position is not located too far forward, it is possible to reduce the feeling of strangeness toward parking of the vehicle 16 as viewed from the following vehicle.

The functions, connections, numbers, arrangement, etc. of the configurations in each embodiment described above may be changed or omitted as appropriate within the scope of the invention and the scope equivalent to the scope of the invention. The embodiments may be combined as appropriate. The order of the steps in each embodiment may be changed as appropriate.

Although the above embodiments illustrate an example of assisting in parking of the vehicle 16 that can be autonomously driven, the target to be assisted is not limited to the vehicle 16 that can be autonomously driven. For example, the above embodiments may be applied to a vehicle that is manually parked by a driver. Specifically, for example, the parking management device may send to a manually driven vehicle either forward travel or reverse travel as the travel method, and may further send to the manually driven vehicle either forward parking or reverse parking as the parking method.

### Description of the Reference Numerals

10: parking system, 12: parking management system, 14: park assist system, 16: vehicle, 16a: vehicle reference position, 17: another vehicle, 20: parking management device, 23: detector, 34: park assist device, 86a: route setting unit, 86b: guidance control unit, A: steering wheel turning area, R1: forward parking route, R2: steering wheel turning parking route, RS: forward stop position, TR: parking route

## Claims

1. A park assist device, comprising:
a route setting unit that sets a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and
a guidance control unit that guides the vehicle according to the parking route, wherein
the route setting unit sets a distance between the vehicle stopped at the forward travel stop position and an entry-side end of the vehicle into the parking space, and
the route setting unit sets the forward travel stop position to a position that allows the vehicle to be guided so as to be parked in the forward travel attitude into the parking space after the guiding the vehicle in reverse by turning the vehicle with a steering angle determined according to the distance.

2. The park assist device according to claim 1, wherein a reversing completion position of the guiding the vehicle in reverse is set to such a position that a reference position for guidance of the vehicle is included in a steering wheel turning area having a same width as the parking space and connecting to the parking space.

3. The park assist device according to claim 1, wherein the steering angle is a steering angle that provides a minimum turning radius within such a steering angle range that the vehicle does not come into contact with another vehicle.

4. The park assist device according to claim 1, wherein the route setting unit sets a route so that clearance to another vehicle parked on either side of the parking space is changed when a detector mounted on the vehicle detects that part of the other vehicle and the vehicle are located next to each other inside the parking space while guiding the vehicle forward into the parking space.

5. The park assist device according to any one of claims 1 to 4, wherein a reference position of the vehicle is a middle of a rear wheel axle of the vehicle.

6. The park assist device according to claim 2, wherein a middle of a front wheel axle of the vehicle is located in the steering wheel turning area when the reversing of the vehicle is completed.

7. The park assist device according to claim 2, wherein the route setting unit secures the distance that allows the vehicle to be turned with the steering angle so that the reference position of the vehicle and a middle of a front wheel axle of the vehicle are located in the steering wheel turning area.

8. A program causing a computer to function as
a route setting means for setting a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle, and
a guidance control means for guiding the vehicle according to the parking route, wherein the forward travel stop position is set to a position that allows the vehicle to be guided so as to be parked in the forward travel attitude into the parking space after the guiding the vehicle in reverse by turning the vehicle with a steering angle determined according to a distance between the vehicle stopped at the forward travel stop position and an entry-side end of the vehicle into the parking space.

9. A park assist method that is performed by a park assist device, the park assist method comprising:
a route setting step of setting a parking route including a forward parking route for guiding a vehicle forward from a current position of the vehicle to a forward travel stop position and a steering wheel turning parking route for guiding the vehicle in reverse from the forward travel stop position and guiding the vehicle forward after reversing is completed, in order to park the vehicle in a forward travel attitude into a parking space for the vehicle; and
a guidance control step of guiding the vehicle according to the parking route, wherein the forward travel stop position is set to a position that allows the vehicle to be guided so as to be parked in the forward travel attitude into the parking space after the guiding the vehicle in reverse by turning the vehicle with a steering angle determined according to a distance between the vehicle stopped at the forward travel stop position and an entry-side end of the vehicle into the parking space.
